# FASCICULE DE BREVET EUROPEEN

(11) **EP 1 893 879 B1**
(45) Date de publication et mention de la délivrance du brevet: **07.12.2011**
(21) Numéro de dépôt: 06778959.4
(22) Date de dépôt: 20.06.2006
(51) Int. Cl.: F16D 13/64

(54) **ELEMENT DE PROGRESSIVITE POUR FRICTION D'EMBRAYAGE**
LEICHT ZU BETÄTIGENDES ELEMENT FÜR EINE KUPPLUNGSREIBUNGSSCHEIBE
SMOOTH ENGAGEMENT ELEMENT FOR CLUTCH FRICTION DISC

(30) Priorité: 23.06.2005 FR 0551745
(43) Date de publication de la demande: 05.03.2008
(73) Titulaire: Valeo Matériaux de Friction, 87020 Limoges (FR)
(72) Inventeur: DUMAS, Pierre, F-87800 Burgnac (FR); PANTIER, Philippe, F-87370 Laurière (FR); PINEDA, Philippe, F-19100 Brive La Gaillarde (FR); TESSIER, Valérie, F-87350 Panazol (FR); VATIN, Géraud, F-87570 Rilhac Rancon (FR)
(74) Mandataire: Tarrère, Blandine
(86) Numéro de dépôt international: PCT/FR2006/050613
(87) Numéro de publication internationale: WO 2006/136753

(56) Documents cités:
- EP-A- 0 252 583
- EP-A- 0 619 354
- FR-A- 2 255 499

## Description

L'invention concerne une friction d'embrayage comportant un élément de progressivité et un procédé de fabrication d'une telle friction.

Un embrayage de véhicule automobile permet de sélectivement solidariser et désolidariser un volant moteur et un arbre d'entrée de boîte de vitesses. A cet effet, l'embrayage comporte classiquement un mécanisme, solidaire en rotation du volant moteur, et une friction, solidaire en rotation de l'arbre d'entrée de la boîte de vitesses.

Une friction comporte un disque métallique, percé en son centre. Des première et deuxième garnitures en forme de couronnes plates sont fixées à la périphérie de chacune des faces du disque.

Le mécanisme comporte un plateau de pression et un plateau de réaction, coaxiaux à la friction, faisant face aux première et deuxième garnitures, respectivement. II comporte également un diaphragme, également coaxial au disque de friction, dont l'actionnement permet de rapprocher ou d'écarter les plateaux de pression et de réaction entre des positions embrayée et débrayée.

Dans la position embrayée, les plateaux pincent suffisamment les garnitures pour permettre une transmission de couple entre le mécanisme et la friction.

Dans la position débrayée au contraire, les plateaux sont suffisamment écartés pour que le mécanisme et la friction soient découplés mécaniquement et puissent tourner indépendamment l'un de l'autre.

Au-delà de la transmission sélective de couple, une friction doit également assurer la progressivité de cette transmission lors du démarrage du véhicule et du passage des vitesses. Cette progressivité contribue au confort de conduite, limite le bruit et améliore la répartition des efforts sur les garnitures et les plateaux.

A cet effet, le disque peut par exemple être localement déformable au droit des garnitures.

Comme décrit dans EP 0 504 033, un matériau cellulaire élastique peut également être disposé entre les garnitures et le disque.pour assurer la progressivité de la transmission. Le matériau cellulaire est formé à partir de matériaux appartenant au groupe comprenant les mousses d'élastomères, telles que les mousses de silicone et les mousses de caoutchoucs fluorés, les matières thermoplastiques moulées avec insufflation de gaz pour créer une porosité, telles que les polyamides, les polyéthercétones, les mousses de résines thermodurcissables possédant une souplesse suffisante telles que les résines époxy modifiées.

EP 0 504 033 décrit également un deuxième mode de réalisation dans lequel le disque est formé par assemblage de premier et deuxième flasques. Chaque flasque, en forme générale de disque, présente une partie centrale de liaison plane, une partie périphérique plane annulaire s'étendant radialement parallèlement à la partie centrale, et une partie intermédiaire reliant la partie centrale et la partie périphérique en assurant un décalage axial de la partie périphérique par rapport à la partie centrale. Les parties centrales des flasques, percées d'un évidement central, sont jointives.

Les garnitures sont fixées sur les faces extérieures des parties périphériques.

Les parties intermédiaires des premier et deuxième flasques sont conformées de manière qu'en solidarisant coaxialement les parties centrales pour former le disque, les parties périphériques soient écartées axialement entre elles et ménagent avec les parties intermédiaires une gorge ou « fente » périphérique débouchant radialement.

Le matériau cellulaire élastique remplit au moins partiellement la fente périphérique du disque. Ce matériau assure ainsi la fonction de progressivité sans interférer avec la fixation des garnitures sur le disque.

EP 0 419 329 décrit également une friction comportant un disque similaire au disque du deuxième mode de réalisation de EP 0 504 033. La progressivité est assurée au moyen d'une pluralité de protubérances en un caoutchouc à base de silicone qui s'étendent radialement dans la fente périphérique.

EP 0 446 098 décrit enfin une friction similaire à celle de EP 0 419 329 mais dont les protubérances sont réalisées sous la forme de boucles.

Tous les « éléments de progressivité » utilisés jusqu'ici et se présentant sous la forme d'un tampon en un matériau élastique interposé entre les deux garnitures présentent l'inconvénient d'être longs à mettre en oeuvre. En effet, la durée de polymérisation des matériaux utilisés dépasse généralement dix minutes et peut même atteindre une journée. Ces éléments de progressivité sont donc inadaptés à une production industrielle à cadence élevée.

Il existe ainsi un besoin pour un nouvel élément de progressivité interposable entre les deux garnitures et qui soit mieux adapté aux procédés de fabrication industrielle des frictions, Le but de l'invention est de satisfaire ce besoin.

Selon l'invention, on atteint ce but au moyen d'une friction d'enbrayage selon la revendication 1 dans laquelle l'élément de progressivité est constitué, au moins en partie, de préférence totalement, en une silicone d'addition (ou « polysiloxane d'addition ») monocomposant adhésive.

Avantageusement, la polymérisation d'une telle silicone est très rapide.

Les silicones d'addition préférées sont l'élastomère de silicone Dow Corning® 3-6096 de la Société Dow Coming et l'élastomère de silicone Addisil 6100 de la Société GE Bayer Silicones GmbH & Co KG (Allemagne).

De préférence, l'élément de progressivité présente encore une ou plusieurs des caractéristiques suivantes.
- La silicone présente une température de polymérisation comprise entre 130 et 200°C, de préférence d'environ 150 à 180°C.
- La silicone est une silicone de type polydiméthylsiloxane, contenant notamment des groupements vinyliques.

De préférence, la silicone est suffisamment adhésive pour limiter le bâillement des garnitures en service, c'est-à-dire leur écartement l'une de l'autre lors de l'utilisation normale de la friction. Dans ce cas l'élément de progressivité assure donc également une fonction anti-bâillement permettant d'éviter que les deux garnitures ne s'éloignent l'une de l'autre de manière non désirée.

L'invention concerne enfin un procédé de fabrication d'une friction d'embrayage, notamment pour véhicule automobile, la friction comportant des premier et deuxième flasques assemblés en un disque de friction et ménageant une fente périphérique débouchant radialement, et des première et deuxième garnitures fixées sur des faces extérieures et à la périphérie des premier et deuxième flasques.

Les procédés selon l'invention sont décrits dans les revendications 5 et 6.

D'autres caractéristiques et avantages de la présente invention apparaîtront à la lecture de la description qui va suivre et à l'examen du dessin annexé dans lequel
- la figure 1 représente un éclaté d'une friction selon l'invention, selon un premier mode de réalisation;
- les figures 2a à 2d représentent des vues en coupe radiale d'un détail de différents modes de réalisation d'une friction selon l'invention ; la figure 2e représente une autre friction qui n'est pas selon l'invention.
- la figure 3 représente les courbes de progressivité d'une friction selon l'invention à différentes étapes d'un test de gymnasticage.

Dans les différentes figures, des références identiques sont utilisées pour désigner des organes identiques ou analogues.

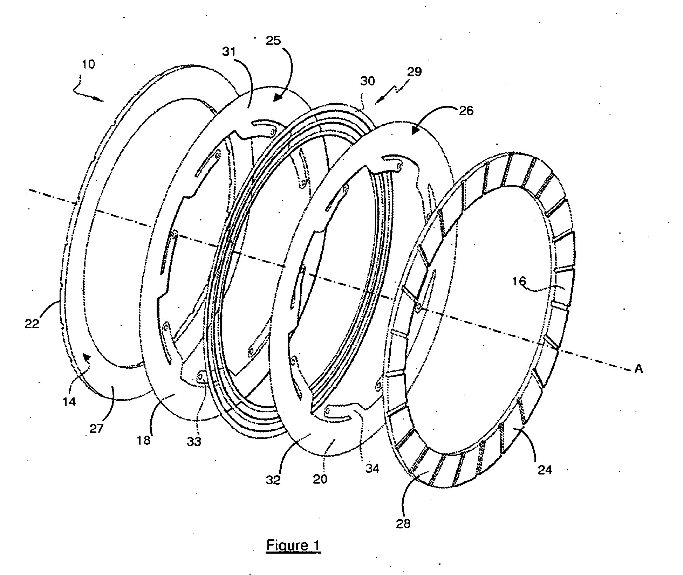

La figure 1 représente une friction 10.

La friction 10 d'axe A comporte un disque métallique 12, percé en son centre, présentant ainsi une forme générale d'anneau plat. Des première et deuxième garnitures, 14 et 16 respectivement, en forme de couronne plate sont fixées à la périphérie des première et deuxième faces extérieures latérales 18 et 20 du disque 12, respectivement.

Des faces extérieures 22 et 24 des garnitures 14 et 16 sont destinées à coopérer avec un plateau de pression et un plateau de réaction (non représentés), respectivement.

Le disque 12 comporte des premier 25 et deuxième 26 flasques (ou « clinquants ») sensiblement plans et parallèles, en forme de disque percé. Les faces intérieures 27 et 28 des première 14 et deuxième 16 garnitures de friction sont fixées, par exemple par collage ou par rivets, sur les faces extérieures 18 et 20 des premier 25 et deuxième 26 flasques, respectivement. En variante, un flasque et la garniture correspondante peuvent être formés en une seule et même pièce, par exemple par moulage par injection.

Les premier 25 et deuxième 26 flasques peuvent par exemple être constitués en un matériau composite ou en acier comportant de préférence 0,68% ou 0,75% de carbone (désigné respectivement XC68 et XC75 selon la norme française AFNOR). Ils sont sensiblement annulaires, coaxiaux d'axe A, et écartés axialement l'un par rapport à l'autre au moyen d'un élément de progressivité 29 prenant la forme d'une pluralité de cordons concentriques 30 d'axe A interposés entre les deux faces intérieures 31 et 32 des flasques 25 et 26.

De préférence, l'élément de progressivité 29 comporte trois cordons 30.

La friction 10 comporte en outre des premières et deuxièmes languettes de liaison, 33 et 34 respectivement, venues de matière avec les premier et deuxième flasques 25 et 26, respectivement, les deuxièmes languettes de liaison 34 étant inclinées par rapport au plan de ces flasques vers le plan médian de la friction. L'extrémité libre de chaque première languette de liaison 33 est conformée et agencée pour être reliée à la surface d'une deuxième languette 34 correspondante lorsque les premier et deuxième flasques se déplacent axialement l'un par rapport à l'autre, notamment en conséquence d'un pincement de la friction entre le plateau de pression et le plateau de réaction. Les premier et deuxième flasques 25 et 26 se déplacent alors parallèlement l'un par rapport à l'autre par vissage selon leur axe A. La présence optionnelle des languettes de liaison 33 et 34 améliore avantageusement le contact des garnitures de friction avec les plateaux de pression et de réaction.

Selon l'invention, l'élément de progressivité 29 est, au moins en partie, en une silicone d'addition. Une partie d'un cordon 30, tout un cordon 30, ou, de préférence, tous les cordons 30 sont en une silicone d'addition.

Les élastomères silicones sont le résultat d'une réticulation, c'est-à-dire d'une polymérisation d'addition ou de condensation qui lie des chaînes polymères entre elles. Le taux de réticulation et le renforcement éventuel par des charges minérales déterminent les propriétés mécaniques finales de l'élastomère.

On distingue les « silicones de condensation » et les « silicones d'addition ».

Les silicones de condensation sont obtenues au moyen d'une réaction dite « de condensation » au cours de laquelle, pour former une molécule de silicone, deux ou plusieurs molécules sont unies en générant un sous-produit. Typiquement, une telle réaction de condensation fait intervenir, outre les polymères, agents de réticulation et éventuellement charges renforçantes, de l'eau et un catalyseur, par exemple du titane ou de l'étain. La réaction par condensation est lente, prenant généralement plusieurs heures, que le système soit monocomposant ou bicomposant.

Les silicones d'addition résultent d'une réaction dite « d'addition » dans laquelle une molécule de silicone est formée par juxtaposition de deux ou plusieurs autres sans formation d'un sous-produit. Typiquement, une telle réaction d'addition fait intervenir, outre les polymères, agents de réticulation et éventuellement charges renforçantes, un catalyseur, notamment un métal noble tel que par exemple du platine, du rhodium, de l'irridium ou du palladium. La présence de traces de platine, notamment de l'ordre de 1 à 20 ppm en poids, dans la silicone indique normalement qu'une silicone est une silicone d'addition. La réaction par addition est rapide, prenant généralement quelques minutes, que le système soit monocomposant ou bicomposant.

Proches des silicones d'addition, les silicones à réticulation peroxydique se décomposent à haute température pour produire des radicaux libres très réactifs qui vont promouvoir la formation de liaisons chimiques entre les chaînes linéaires qui constituent la matrice polymère. Les peroxydes ont été utilisés pendant des décennies dans le domaine des silicones solides. Des sous-produits sont formés, avec une odeur désagréable, et pas toujours inoffensifs. Dans certains cas, on peut s'attendre à des restrictions légales.

Les silicones d'addition apportent de nombreux avantages par rapport à ceux à réticulation peroxydique :
- il n'y a pas de sous-produits générés (c'est à dire pas de risque de produits toxiques)
- il y a une polymérisation plus rapide (jusqu'à 50%)

Les silicones d'addition préférées sont l'élastomère de silicone Dow Corning® 3-6096, l'Addisil 6100 et le Rhodorsil ® ESA 7142.

L'élastomère de silicone Dow Corning® 3-6096 de la Société Dow Corning est une silicone d'addition monocomposant qui se présente sous la forme d'une pâte noire. Elle polymérise à la chaleur, en moins de 5 minutes à 180°C.

La silicone Addisil 6100 de la Société GE Bayer Silicones GmbH & Co KG (Allemagne) est un polydiméthyle siloxane contenant des groupes vinylique avec de l'acide silicique pyrogénique. Elle polymérise en moins de 2 minutes à 175°C.

Le RHODORSIL® ESA 7142 est un élastomère silicone monocomposant du type polyaddition, non coulant et réticulant à chaud. Fabriqué par la Société Rhodia Silicones s.a.s. (France), il est préconisé pour l'étanchéité et la protection de boîtiers par jointoyage et remplissage, ainsi que pour l'isolation des moteurs électriques. Cet adhésif est à base de polyméthylvinylsiloxanes, de polyméthylhydrogénosilaxanes et de silice.

D'autres constituants qu'une silicone d'addition peuvent être mélangés à cette dernière pour former un élément de progressivité 29 selon l'invention.

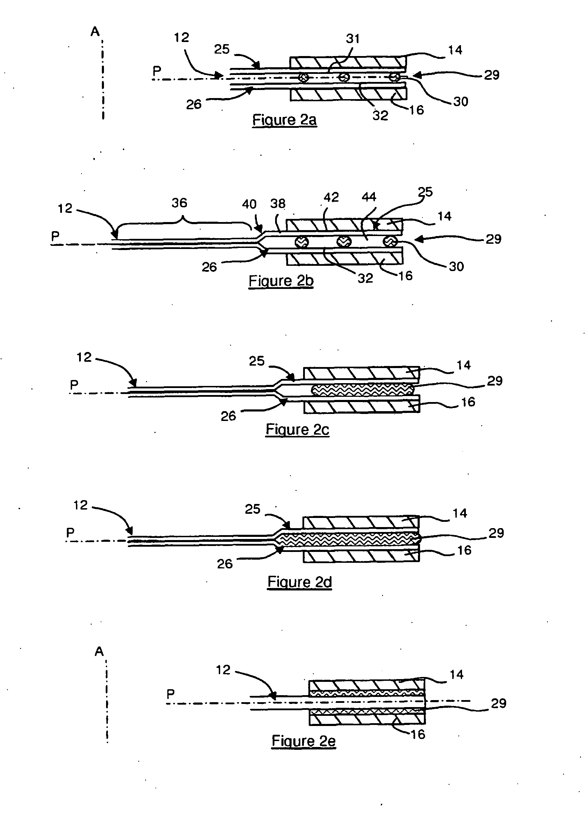

La figure 2a représente une coupe radiale schématique d'une partie périphérique de la friction 10 représentée sur la figure 1, dans une zone où le disque 12 ne présente pas de languette de liaison.

De nombreux autres modes de réalisation sont possibles.

Par exemple, les figures 2b à 2d représentent des modes de réalisation de l'invention dans lesquels les premier et deuxième flasques 25 et 26 présentent une forme générale en disque percé d'un évidement central, avec une partie centrale plane 36, une partie périphérique 38 plane et s'étendant radialement sensiblement parallèlement à la partie centrale 36, et une partie intermédiaire 40 reliant la partie centrale 36 et la partie périphérique 38. Les garnitures 14 et 16 sont fixées sur les faces extérieures 42 des parties périphériques 38.

Comme dans EP 0 504 033, les parties intermédiaires 40 des première et deuxième flasques 25 et 26 sont conformées pour décaler axialement et vers l'extérieur, les parties périphériques 38 par rapport aux parties centrales 36 de manière à former une fente périphérique 44 débouchant radialement.

L'élément de progressivité 29 selon l'invention peut être formé de cordons 30 disposés à l'intérieur de la fente 44 et pressés entre les faces intérieures 31 et 32 des parties périphériques 38. L'élément de progressivité 29 selon l'invention peut aussi être formé par un cordon unique remplissant partiellement (figure 2c) ou complètement (figure 2d) la fente 44.

La figure 2e représente une autre friction dans lequel un élément de progressivité 29 est intercalé entre chaque garniture 14 et 16 et le disque 12. De préférence, l'élément de progressivité 29 sert également à coller les garnitures sur le disque 12. Dans ce mode de réalisation, le disque 12 est monobloc. La disposition de l'élément de progressivité 29 entre les garnitures 14 et/ou 16 et le disque 12 est également possible avec un disque 12 en deux parties 25 et 26, comme décrit ci-dessus. Dans ce cas, un élément de progressivité selon l'invention peut également être inséré dans la fente périphérique 44.

La fabrication de la friction représentée sur les figures 1 et 2a peut être effectuée de la marnière suivante :
a) On encolle d'abord les faces intérieures 27 et 28 des garnitures 14 et 16, puis on les colle respectivement sur les faces extérieures 18 et 20 des flasques 25 et 26 préalablement préparées à cette fin. Cette préparation, par exemple un nettoyage au moyen d'un solvant et/ou l'application d'un primaire, est fonction de la nature de la colle et bien connue de l'homme du métier.
b) On polymérise ensuite la colle par chauffage.
c) Puis, suivant les préconisations du fabriquant de la silicone utilisée, on nettoie les faces intérieures 31 et 32 des flasques 25 et 26 et, éventuellement, on applique un primaire.
d) On forme ensuite des cordons 30 en silicone d'addition sur la face intérieure 31. De préférence, la silicone utilisée est une silicone monocomposant dont la polymérisation ne commence qu'en conséquence d'un chauffage. Après avoir déposé la silicone sur la face intérieure 31, les flasques peuvent donc être manipulés et transportés aussi longtemps que nécessaire. En outre, tout risque de polymérisation non désirée, par exemple de traces de silicone sur les appareils utilisés pour déposer les cordons 30, est écarté. Le déclenchement de la polymérisation peut avantageusement être parfaitement contrôlé. L'utilisation d'une silicone monocomposant est ainsi bien adaptée aux contraintes de production industrielle de la friction.
e) On accole les faces intérieures 31 et 32 des flasques 25 et 26 en les disposant écartées l'une de l'autre d'une distance définie inférieure au diamètre d'extrusion de la silicone. La silicone déposée sur la face intérieure 31 est ainsi également en contact avec la face intérieure 32. De préférence, on bride les flasques 25 et 26, c'est-à-dire qu'on les maintient fermement immobilisés l'un par rapport à l'autre pour qu'ils ne subissent pas de distorsion pendant l'étape suivante.
f) Selon les silicones, on chauffe alors la matière des cordons 30 pour qu'elle polymérise par addition. Le chauffage est de préférence effectué par conduction ou irradiation au moyen d'un rayonnement infrarouge. Avantageusement, la polymérisation des silicones d'addition est rapide.

Selon une variante du procédé de fabrication selon l'invention, on choisit une colle pour fixer les garnitures et une silicone d'addition pour constituer l'élément de progressivité qui présentent des conditions de polymérisation proches. Par exemple, la colle peut être une colle de type Araldyte 64 qui réticule à 180°C et la silicone peut être une silicone Dow Corning® 3-6096, de l'Addisil 6100 de Bayer Silicones ou du Rhodorsil® de Rhodia Silicones s.a.s.. Dans une mode de réalisation particulier, notamment dans une friction du type de celle représentée sur la figure 2e, la silicone peut également être choisie pour servir de colle de fixation des garnitures.

On peut alors procéder conformément à l'étape a), puis aux étapes c) à f) décrites ci-dessus, c'est-à-dire sans exécuter une polymérisation de la colle (étape b)) antérieurement à la polymérisation de la silicone. A l'étape f), le chauffage de la friction permet une prise en masse simultanée de la colle et de la silicone. Le procédé de fabrication est avantageusement simplifié et plus économique.

Un test de gymnasticage axial a été effectué pour évaluer la tenue à la fatigue de l'élément de progressivité selon l'invention. Ce test consiste à appliquer sur une friction d'un embrayage, de manière cyclique, un effort axial correspondant au tarage maximal de cet embrayage.

La friction testée, du type de celle représentée sur la figure 2a, présentait un diamètre extérieur de 215 mm. Elle comportait un élément de progressivité en Dow Corning® 3-6096. L'effort axial appliqué était de 7300 N.

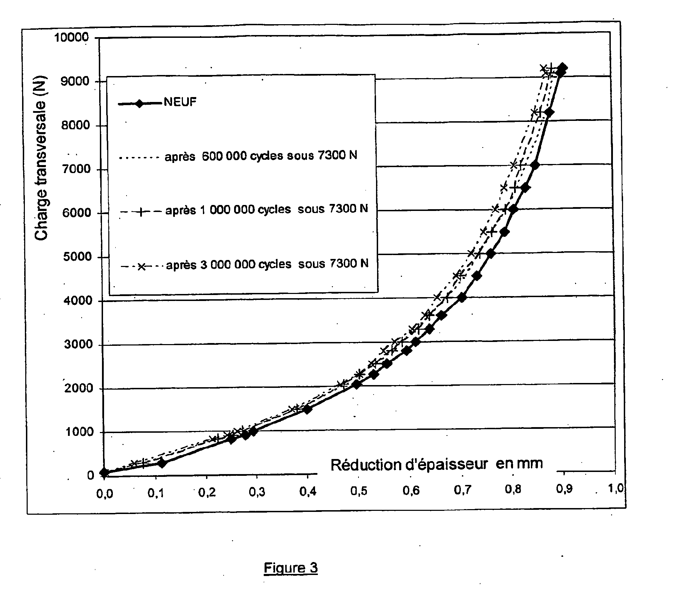

La figure 3 représente les courbes de progressivité de cette friction après 0, 600 000, un million et trois millions de cycles. Une courbe de progressivité représente la réduction d'épaisseur, en millimètres, d'un élément de progressivité sous l'effet d'une charge transversale.

On constate une très bonne conservation de la courbe de progressivité avec la silicone d'addition Dow Corning® 3-6096. Les frictions classiques dont la progressivité est réalisée par cambrage de pales métalliques n'offrent pas d'aussi bons résultats.

Comme cela apparaît clairement à présent, l'invention fournit un élément de progressivité interposable entre les deux garnitures (entre au moins une garniture et le disque de la friction et/ou à l'intérieur d'une fente périphérique du disque s'étendant au droit des garnitures) qui est bien adapté aux procédés de fabrication industrielle des frictions. La durée de polymérisation de l'élément de progressivité est en effet avantageusement très courte.

Bien entendu, la présente invention n'est pas limitée aux modes de réalisation décrits et représentés fournis à titre d'exemples illustratifs et non limitatifs.

En particulier, la forme du disque, des flasques, de la fente périphérique et des garnitures, ou la nature des moyens de fixation des garnitures ne sont pas limitatifs.

En outre, l'élément de progressivité, formant ressort, n'est pas nécessairement collé à chacun des flasques entre lesquels il est intercalé. Sa forme peut être quelconque. Notamment, les cordons peuvent être de formes quelconques, fermées ou non, être continus ou non. L'élément de progressivité peut également avoir la forme de plots.

Enfin, la fente périphérique ne s'étend pas nécessairement sur toute la périphérie du disque. De préférence, sa profondeur est cependant suffisante pour qu'elle s'étende au droit de toute la surface d'appui des garnitures sur le disque.

## Revendications

1. Friction d'embrayage, notamment pour véhicule automobile, comportant des premier (25) et deuxième (26) flasques assemblés en un disque (12), une fente périphérique (44) débouchant radialement ménagée sur le disque et des première et deuxième garnitures fixées sur des faces extérieures (42 ; 18,20) des premier et deuxième flasques et un élément de progressivité (29), **caractérisé en ce que** l'élément de progressivité (29) disposé dans la fente périphérique (44), est constitué, au moins en partie, en une silicone d'addition monocomposant adhésive.

2. Friction d'embrayage selon la revendication 1, dans lequel la silicone d'addition présente une température de polymérisation comprise entre 130 et 200°C, de préférence entre 150 et 180 °C.

3. Friction d'embrayage selon l'une quelconque des revendications précédentes, dans lequel la silicone est une silicone de type polydiméthylsiloxane contenant notamment des groupements vinyliques.

4. Friction d'embrayage selon la revendication 1, dans lequel la silicone d'addition est choisie parmi les produits Dow Corning® 3-6096 , Addisil 6100 et Rhodorsil® ESA 7142

5. Procédé de fabrication d'une friction d'embrayage, notamment pour véhicule automobile, la friction comportant des premier (25) et deuxième (26) flasques assemblés en un disque de friction (12) et ménageant une fente périphérique (44) débouchant radialement, et des première (14) et deuxième (16) garnitures fixées sur des faces extérieures (42 ;18,20) et à la périphérie des premier et deuxième flasques,
**caractérisé en ce qu'**il comporte les étapes suivantes :
A) application d'une colle sur une face intérieure (27) de la première garniture (14) et apposition de ladite face intérieure (27) sur la face extérieure (18) du premier flasque (25), et sur une face intérieure (28) de la deuxième garniture (16) et apposition de ladite face intérieure (28) sur la face extérieure (20) du deuxième flasque (26),
B) polymérisation de la colle par chauffage,
C) application, sur une surface (31) du premier flasque (26) des cordons (30) d'une composition comportant une silicone d'addition monocomposant,
D) accolage des faces intérieures ((31, 32) des premier et deuxième flasques (25, 26) en les disposant écartées l'une de l'autre d'une distance définie inférieure au diamètre d'extrusion de la composition.
E) bridage des flasques, et,
F) chauffage de la composition pour la polymériser.

6. Procédé de fabrication d'une friction d'embrayage, notamment pour véhicule automobile, la friction comportant des premier (25) et deuxième (26) flasques assemblés en un disque de friction (12) et ménageant une fente périphérique (44) débouchant radialement, et des première (14) et deuxième (16) garnitures fixées sur des faces extérieures (42 ;18,20) et à la périphérie des premier et deuxième flasques,
**caractérisé en ce qu'**il comporte les étapes suivantes :
A) application d'une colle sur une face intérieure (27) de la première garniture (14) et apposition de ladite face intérieure (27) sur la face extérieure (18) du premier flasque (25), et sur une face intérieure (28) de la deuxième garniture (16) et apposition de ladite face intérieure (28) sur la face extérieure (20) du deuxième flasque (26),
B) application, sur une surface (31) du premier flasque (26) des cordons (30) d'une composition comportant une silicone d'addition monocomposant,
C) accolage des faces intérieures ((31, 32) des premier et deuxième flasques (25, 26) en les disposant écartées l'une de l'autre d'une distance définie inférieure au diamètre d'extrusion de la composition,
D) bridage des flasques, et,
E) chauffage de la composition pour la polymériser,
et dans lequel la colle de fixation d'au moins une des garnitures (14,16) est apte à polymériser dans les mêmes conditions que la composition.

## Claims

1. Clutch friction device, in particular for a motor vehicle, comprising first (25) and second (26) flanges which are assembled in a disc (12), a peripheral slot (44) which opens radially and is provided in the disc, and first and second linings which are secured to outer surfaces (42; 18, 20) of the first and second flanges and a progressivité clement (29), **characterised in that** the progressivity element (29) which is disposed in the peripheral slot (44) is constituted at least partly by an adhesive single-component addition silicone.

2. Clutch friction device according to claim 1, wherein the addition silicone has a polymerization température of between 130 and 200°C, and preferable between 150 and 180°C.

3. Clutch friction device according to any one of the preceding claims, wherein the silicone is a silicone of a the polydimethylsiloxane type, containing in particular vinyl groups.

4. Crutch friction device according to claim 1, wherein the addition silicone is selected from amongst the products Dow Coming® 3-6096, Addisil 6100 and Rhodorsil® ESA 7142.

5. Method for production of a clutch friction device, in particular for a motor vehicle, the friction device comprising first (25) and second (26) flanges which are assembled in a friction disc (12), and having a peripheral slot (44) which opens radially, and first (14) and second (16) linings which are secured to outer surfaces (42; 18, 20) and to the periphery of the first and second flanges,
**characterised in that** it comprises the following steps:
A) application of a glue to an inner surface (27) of the first lining (14), and placing the said inner surface (27) on the outer surface (18) of the first flange (25) and on an inner surface (28) of the second lining (16), and adding the said inner surface (28) onto the outer surface (20) of the second flange (26);
B) polymérisation of the glue by heating;
C) application onto a surface (3 1) of the first flange (26) of beads (30) of a composition comprising a single-component addition silicone;
D) bringing towards one another the inner surfaces (31, 32) of the first and second flanges (25, 26) whilst keeping them spaced from one another by a predefined distance which is smaller than the extrusion diameter of the composition;
E) fastening the flanges together; and
F) heating the composition in order to polymerise it.

6. Method for production of a clutch friction device, in particular for a motor vesicle, the friction device comprising first (25) and second (26) flanges which are assembled in a friction disc (12), and having a peripheral slot (44) which opens radially, and first (14) and second (16) linings which are secured to outer surfaces (42; 18, 20) and to the periphery of the first and second flanges,
**characterised in that** it comprises the following steps:
A) application of a glue to an inner surface (27) of the first lining (14), and placing the said inner surface (27) on the outer surface (18) of the first flange (25) and on an inner surface (28) of the second lining (16), and adding the said inner surface (28) onto the outer surface (20) of the second flange (26);
B) application onto a surface (31) of the first flange (26) of beads (30) of a composition comprising a single-component addition silicone;
C) bringing towards one another the inner surfaces (31, 32) of the first and second flanges (25, 26) whilst keeping them spaced from one another by a predefined distance which is smaller than the extrusion diameter of the composition;
D) fastening the flanges together; and
E) heating the composition, in order to polymerise it,
and wherein the glue for securing at least one of the linings (14, 16) can be polymerised under the same conditions as the composition.

## Patentansprüche

1. Reibungsscheibe einer Kupplung, insbesondere für Kraftfahrzeuge, umfassend einen ersten (25) und einen zweiten (26) Flansch, die zu einer Scheibe (12) zusammengefügt sind, einen in die Scheibe eingebrachten radial mündenden Umfangsschlitz (44) und erste und zweite Beläge, die auf den äußeren Flächen (42; 18, 20) des ersten und zweiten Flanschs befestigt sind, sowie ein Progressivitätselement (29), **dadurch gekennzeichnet, dass** das in dem Umfangsschlitz (44) angeordnete Progressivitätselement (29) zumindest zum Teil aus einem einkomponentigem adhäsiven Additions-Silikon aufgebaut ist.

2. Kupplungsreibungsscheibe nach Anspruch 1, wobei das Additions-Silikon eine Polymerisationstemperatur zwischen 130 und 200°C, vorzugsweise zwischen 150 und 180°C aufweist.

3. Kupplungsreibungsscheibe nach einem der vorangehenden Ansprüche, wobei das Silikon ein Silikon vom Typ Polydimethylsiloxan ist und insbesondere Vinylgruppen enthält.

4. Kupplungsreibungsscheibe nach Anspruch 1, wobei das Additions-Silikon aus den Produkten Dow Corning® 3-6096, Addisil 6100 und Rhodorsil® ESA 7142 ausgewählt ist.

5. Verfahren zur Herstellung einer Reibungsscheibe einer Kupplung, insbesondere für Kraftfahrzeuge, wobei die Reibungsscheibe einen ersten (25) und zweiten (26) Flansch umfasst, die zu einer Reibungsscheibe (12) zusammengefügt sind, wobei ein radial mündender Umfangsschlitz (44) eingebracht ist, und erste (14) und zweite (16) auf den äußeren Flächen (42; 18, 20) und am Umfang der ersten und zweiten Flansche befestigt sind,
**dadurch gekennzeichnet, dass** es die folgende Schritte umfasst:
A) Aufbringen eines Klebstoffs auf einer inneren Fläche (27) des ersten Belags (14) und Anfügung dieser inneren Fläche (27) auf der äußeren Fläche (18) des ersten Flansches (25), sowie auf einer inneren Fläche (28) des zweiten Belags (16) und Anfügung dieser inneren Fläche (28) auf der äußeren Fläche (20) des zweiten Flansches (26),
B) Polymerisation des Klebstoffs durch Erwärmung,
C) Aufbringung von Strängen (30) einer Zusammensetzung mit einem einkomponentigen Additions-Silikon auf einer Oberfläche (31) des ersten Flanschs (26),
D) Anbindung der inneren Flächen (31, 32) der ersten und zweiten Flansche (25, 26), indem sie voneinander beabstandet in einer definierten Entfernung, die kleiner als der Extrusionsdurchmesser der Zusammensetzung ist, angeordnet werden,
E) Anflanschen der Flansche und
F) Erwärmung der Zusammensetzung um sie zu polymerisieren.

6. Verfahren zur Herstellung einer Reibungsscheibe einer Kupplung, insbesondere für Kraftfahrzeuge, wobei die Reibungsscheibe einen ersten (25) und zweiten (26) Flansch umfasst, die zu einer Reibungsscheibe (12) zusammengefügt sind, wobei ein radial mündender Umfangsschlitz (44) eingebracht ist, und erste (14) und zweite (16) Beläge auf den äußeren Flächen (42; 18, 20) und am Umfang der ersten und zweiten Flansche befestigt sind,
**dadurch gekennzeichnet, dass** es die folgende Schritte umfasst:
A) Aufbringen eines Klebstoffs auf einer inneren Fläche (27) des ersten Belags (14) und Anfügung dieser inneren Fläche (27) auf der äußeren Fläche (18) des Flansches (25), sowie auf einer inneren Fläche (28) des zweiten Belags (16) und Anfügung dieser inneren Fläche (28) auf der äußeren Fläche (20) des zweiten Flansches (26),
B) Aufbringung von Strängen (30) einer Zusammensetzung mit einem einkomponentigen Additions-Silikon auf einer Oberfläche (31) des ersten Flanschs (26),
C) Anbindung der inneren Flächen (31, 32) der ersten und zweiten Flansche (25, 26), indem sie voneinander beabstandet in einer definierten Entfernung, die kleiner als der Extrusionsdurchmesser der Zusammensetzung ist, angeordnet werden,
D) Anflanschen der Flansche und
E) Erwärmung der Zusammensetzung um sie zu polymerisieren, wobei der Klebstoff zur Befestigung von zumindest einem der Beläge (14, 16) geeignet ist, unter denselben Bedingungen zu polymerisieren wie die Zusammensetzung.
